# EUROPÄISCHE PATENTANMELDUNG

(11) **EP 1 114 693 A2**
(43) Veröffentlichungstag der Anmeldung: **11.07.2001**
(21) Anmeldenummer: 00125734.4
(22) Anmeldetag: 24.11.2000
(51) Int. Cl.: B23Q 1/00

(54) **Luft- und Stromversorgungsanschluss für auswechselbare Maschinenwerkzeuge**

(30) Priorität: 05.01.2000 DE 10000174
(71) Anmelder: Emuge-Werk Richard Glimpel Fabrik für Präzisionswerkzeuge (vormals Moschkau & Glimpel), D-91207 Lauf (DE)
(72) Erfinder: Liebald, Peter, 91161 Hilpolstein (DE); Kazda, thomas, 91235 Hartenstein (DE); Porath, Rainer, 90562 Heroldsberg (DE)
(74) Vertreter: Matschkur, Peter

(57) **Zusammenfassung**

Luft- und Stromversorgungsanschluss für ein auswechselbares Maschinenwerkzeug, insbesondere einen Gewindeschneidapparat, wobei ein am Gehäuse des Maschinenwerkzeugs befestigtes Luft- und Stromversorgungs-Anschlussteil bei der Montage des Maschinenwerkzeugs an der Spindelaufnahme der Maschine automatisch an einen daran befestigten Anschlussversorgungsblock elektrisch kontaktierend und unter Freigabe der Druckluftzufuhr andockt.

## Beschreibung

Die Erfindung bezieht sich auf einen Luft- und Stromversorgungsanschluss für ein auswechselbares Maschinenwerkzeug, insbesondere einen Gewindeschneidapparat.

Bei den bisher bekannten Maschinenwerkzeugen mit manuellem Wechsel des Werkzeugs in die Werkzeugmaschine erfolgt die Luft- und Stromversorgung über Werkzeuge mit Anschlüssen, die separat jedes Mal betätigt werden müssen, also an die jeweils eine Druckluftleitung angeschraubt werden muss und an die ein externer Stecker zu einer Stromversorgung angesteckt werden muss. Diese sind aber im Gebrauch sehr unhandlich und aufwendig in der Betätigung beim Wechsel des Werkzeugs. Darüber hinaus stören die frei herumhängenden Anschlussleitungen sehr häufig beim Betrieb des Werkzeugs.

Der Erfindung liegt daher die Aufgabe zugrunde einen Luft- und Stromversorgungsanschluss für auswechselbare Maschinenwerkzeuge zu schaffen, der unabhängig von der Ausgestaltung der jeweils verwendeten Maschine sehr einfach auch nachträglich für die Werkzeuge angebracht werden kann und darüber hinaus einfach und sicher betätigbar ist.

Zur Lösung dieser Aufgabe ist erfindungsgemäß vorgesehen, dass ein am Gehäuse des Maschinenwerkzeugs befestigtes Luft- und Stromversorgungs-Anschlussteil bei der Montage des Maschinenwerkzeugs an der Spindelaufnahme der Maschine automatisch an einen daran befestigten Anschlussversorgungsblock elektrisch kontaktierend und unter Freigabe der Druckluftzufuhr andockt.

Die erfindungsgemäße Ausgestaltung erfordert außer der Befestigung des Anschlussteils am Gehäuse des Maschinenwerkzeugs lediglich das Anschrauben des Anschlussversorgungsblocks neben der Spindelaufnahme der Maschine, um ohne weiteres Zutun bei jedem Wechsel des Werkzeugs automatisch die Stromund Druckluftversorgung zu unterbrechen bzw. anzuschließen.

Mit besonderem Vorteil kann dabei in Ausgestaltung der Erfindung vorgesehen sein, dass der Anschlussversorgungsblock ein Druckluftventil mit einem in Andockrichtung und Ventilöffnungsrichtung verlaufenden Betätigungsstift des Ventilstößels aufweist, der nach dem Anschließen einer Druckluft-Übernahmehülse des Anschlussteils an den Ausgangsstutzen des Ventils des Anschlussversorgungsblocks ein Schließventil in einer Übernahmehülse des Anschlussteils öffnet.

Mit besonderem Vorteil kann dabei weiter vorgesehen sein, dass die Federkraft der Feder des Ventils kleiner ist als die Federkraft der Feder des Schließventils und dass die Länge des Betätigungsstiftes so gewählt ist, dass das Ventil des Anschlussversorgungsblocks bereits vor dem Anschließen der Druckluft-Übernahmehülse des Anschlussteils zum Freiblasen dieses Anschlussteils öffnet. Durch diese Maßnahme werden eventuelle Verunreinigungen vor dem endgültigen Verkuppeln des Anschlussteils am Maschinenwerkzeug mit dem Anschlussblock neben der Spindelaufnahme beseitigt, so dass sie weder die Kupplung der Druckluftleitung noch - worauf weiter unten noch näher eingegangen werden solldie elektrische Verbindung zum externen Stromanschluss behindern können.

Die erfindungsgemäße Ausbildung des Druckluftanschlusses eignet sich hervorragend auch zur gleichzeitigen Herstellung der Verbindung zu einem externen Stromanschluss. Zu diesem Zweck ist in Weiterbildung der Erfindung vorgesehen, dass der Stößel und der Betätigungsstift des Ventils elektrisch leitend mit einem Pol der externen Stromquelle verbunden sind, deren Massepol vorzugsweise mit dem geerdeten Gehäuse des Maschinenwerkzeugs verbunden ist, und dass der in der elektrisch isolierend ausgebildeten Übernahmehülse angeordnete Kolben des Schließventils ebenso wie sein mit der Stromversorgung des Maschinenwerkzeugs verbundener Verschiebebegrenzungsanschlag elektrisch leitend ausgebildet sind.

Mit dem Aufsetzen des Betätigungsstifts auf den die Übernahmehülse des Anschlussteils verschließenden Kolben des Schließventils erfolgt eine elektrisch leitende Verbindung vom Pol der äußeren Stromversorgungsquelle zu diesem Kolben und mit der erfolgreichen Verkupplung der Druckluftleitungen und der entsprechenden Verschiebung des Kolbens gelangt dieser gegen seinen Endanschlag und stellt über diesen dann auch die elektrische Verbindung zur werkzeugseitigen Stromversorgung her.

Ein besonders einfach und robust aufgebauter und gleichwohl sicher funktionierender Luft- und Stromversorungsanschluss ergibt sich in Weiterbildung der Erfindung dadurch, dass das Anschlussteil als mit seinem Schaft gegen eine Feder längsverschiebbar in einer Hülse am Gehäuse des Maschinenwerkzeugs gelagerter Arretierbolzen mit axialer Druckluftbohrung und radialen Übergabestutzen zur ortsfesten gehäuseseitigen Druckluftleitungsöffnung ausgebildet ist, an dem außen ein Arretierstift für einen Stellring des Gewindeschneidapparats befestigt ist, der beim Andocken in eine Freigabestellung bewegt wird.

Dabei soll bevorzugt der radiale Übergabestutzen (oder die radialen Übergabestutzen) in einen axialen Ringraum münden, der in beiden Endstellungen des Arretierbolzens mit der gehäuseseitigen Druckluftleitungsöffnung in Verbindung steht.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: einen Schnitt durch eine erfindungsgemäße an einem im Einzelnen nicht gezeigten Maschinenwerkzeug bzw. am Maschinenständer angeordneten Druckluft- und Stromversorgungsanschluss beim Werkzeugwechsel also während des Entnehmens aus bzw. Einführens in die Spindelaufnahme, und
- Fig. 2: einen der Fig. 1 entsprechenden Schnitt in der angedockten Betriebsstellung vom Maschinenwerkzeug und Druckluft- und Stromversorgungsanschluss.

Das Maschinenwerkzeug 1, das in den Figuren nur schematisch angedeutet ist und das sowohl einen angedeuteten Druckluftverbraucher 2 also auch einen elektrischen Verbraucher 3 beinhaltet, ist mit seiner Spindel 4 auswechselbar in die Spindelaufnahme 5 einsetzbar, wobei das Einsetzen beispielsweise mit Hilfe eines einen entsprechenden Abschnitt 6 erfassenden in den Figuren nicht gezeigten maschinenseitigen Greifers erfolgen kann. Das Maschinenwerkzeug kann beispielsweise ein Gewindeschneidapparat mit über das Ausziehen des Spannkopfs 7 selbsttätig gesteuerter Drehrichtungsumkehr sein, wobei die Druckluftversorgung zum Umschalten der über die Spannkopfausziehung initiierten Getriebeumschaltung dienen kann. Erfindungsgemäß umfasst der Druckluft- und Stromversorgungsanschluss ein Anschlussteil 8 das am Gehäuse 9 des Gewindeschneidapparats befestigt ist und einen am Ständer 10 der Werkzeugmaschine neben der Spindelaufnahme 5 befestigten Anschlussversorgungsblock 11 der über einen Anschlussstutzen 12 an eine externe Druckluftquelle und über einen elektrischen Anschlussstecker 13 mit einem Pol 14 einer äußeren Stromversorgungsquelle 15 verbindbar ist. Der zweite Pol 16 der Stromversorgungsquelle 15 ist als Masseanschluss mit dem Ständer der Werkzeugmaschine und damit auch dem Gehäuse 9 des Maschinenwerkzeugs 1 verbunden.

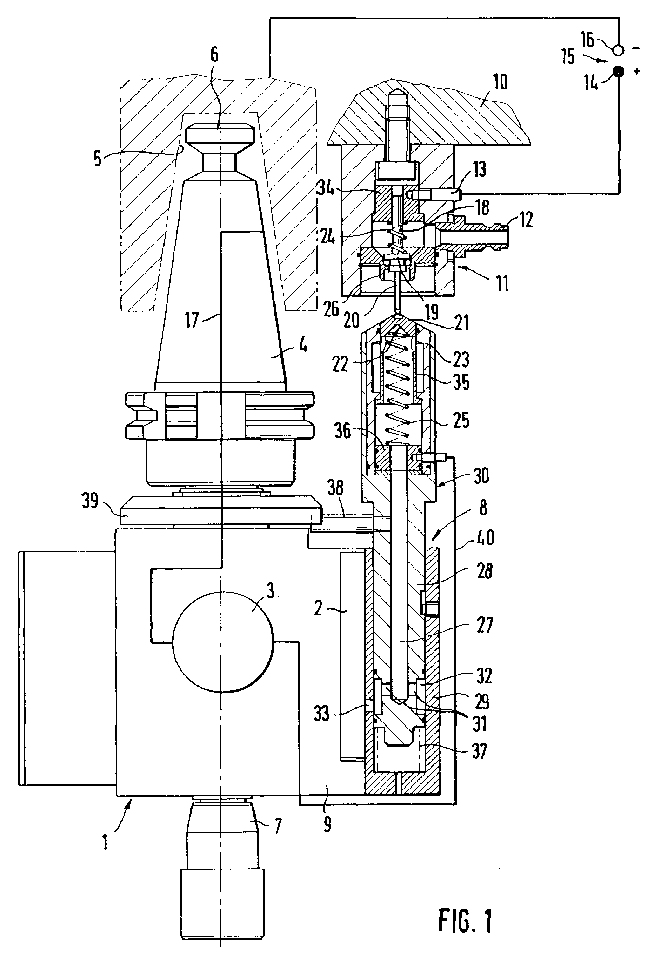

Parallel zur Andockrichtung des Anschlussteils 8, die parallel zur Achse 17 des Maschinenwerkzeugs und auch parallel zur Achse des Stößels 18 eines Ventils 19 für die Druckluft im Anschlussversorgungsblock 11 verläuft, ist am Ventilstößel 18 ein relativ weit nach vorne ragender Betätigungsstift 20 angeordnet, der beim Anschließen eines Maschinenwerkzeugs an die Werkzeugmaschine auf dem Kolben 21 eines Schließventils 22 der Übernahmehülse 23 des Anschlussteils 8 aufsetzt. Die Feder 24 des Ventilstößels 18 des Ventils 19 ist schwächer ausgebildet als die Feder 25 die den Kolben 21 des Schließventils 22 in seine in Fig. 1 gezeigte Schließstellung drückt. Dies hat zur Folge, dass beim Anschließen des Maschinenwerkzeugs an die Werkzeugmaschine und nach dem Aufsetzen des Betätigungsstifts 20 auf den Kolben 21 zunächst das Ventil 19 öffnet und die Druckluft aus dem Ausgangsstutzen 26 des Ventils ausströmt, um dabei das Anschlussteil 8, insbesondere den Kolben 21 und die ihn umgebende Übernahmehülse 23 von etwaigen Verunreinigungen freizublasen. Beim weiteren Fortgang der Schließbewegung, also bei der weiteren Verschiebung des Anschlussteils 8 in Fig. 1 nach oben verschiebt der Betätigungsstift 20 den Kolben 21 gegen die Feder 25 nach unten, während gleichzeitig die Übernahmehülse 23 den Ausgangsstutzen 26 des Anschlussversorgungsblocks 11 dichtend umfasst. In diesem Fall ist dann eine durchgehende abgedichtete Verbindung zwischen dem Anschlussstutzen 12 für den externen Druckluftanschluss und über die Druckluftbohrung 27 des als mit seinem Schaft 28 in einer am Gehäuse 9 befestigten Hülse 29 axial verschiebbarer Arretierbolzen 30 ausgebildeten Anschlussteils 8 zum Druckluftverbraucher 2 hergestellt. Im Einzelnen sind hierzu noch radiale Übergabestutzen 31 ausgehend von der Druckluftbohrung 27 vorgesehen, die in einen Ringraum 32 ausmünden, der in beiden Endstellungen des Arretierbolzens 30 in Verbindung mit der ortsfesten gehäuseseitigen Druckluftleitungsöffnung 33 steht, die über nicht gezeigte Leitungen mit dem inneren Druckluftverbraucher im Maschinenwerkzeug 1 verbunden ist.

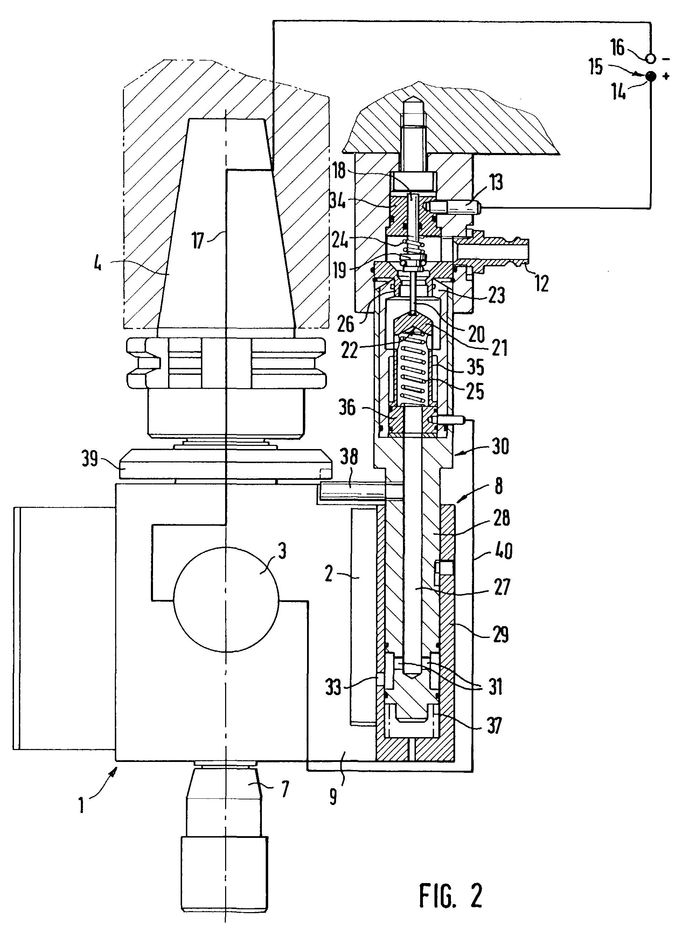

Mit der erfindungsgemäßen Verbindung des Druckluftverbrauchers 2 mit dem Druckluftanschlussstutzen 12 automatisch beim Andocken des Maschinenwerkzeugs an der Werkzeugmaschine erfolgt auch die Stromverbindung. Zu diesem Zweck ist das Lagerteil 34 für den Ventilstößel 18 als elektrisch leitendes Bauteil ausgebildet, das mit dem Anschlussstecker 13 für den Pol 14 der äußeren Stromquelle 15 in ständiger elektrischer Verbindung steht. Der elektrisch leitende Stößel der mit dem elektrisch leitenden Betätigungsstift 20 verbunden ist, stellt nach dem Aufsetzen des Betätigungsstifts 20 auf den Kolben 21 eine Verbindung mit diesem her, der ebenfalls elektrisch leitend ausgebildet ist, wobei der Kolben 21 nach rückwärts als verlängerte Hülse 35 ausgebildet ist, die die Feder 25 teilweise umfasst. Beim Öffnen des Schließventils 22 wird über die Hülse 35 des Kolbens 21 des Schließventils und Feder 25 auf einen Schiebebegrenzungsanschlag 36, der aus Metall ausgebildet ist, der Strom an die Verbindungsleitung 40 zum elektrischen Verbraucher 3 des Maschinenwerkzeugs 1 weiterverbunden. Nachdem die Übernahmehülse 23 über den Ausgangsstutzen 26 geschoben worden ist und somit das Schließventil 22 vollständig geöffnet wurde, wird der dieses Schließventil enthaltende als Arretierbolzen 30 ausgebildete Teil des Anschlussteils 8 insgesamt gegen die Wirkung einer Feder 37 in der Hülse 29 verschoben, um auf diese Art und Weise einen Arretierstift 38, der normalerweise in der Nichtbetriebsstellung einen Stellring 39 des Maschinenwerkzeugs 1 arretiert, in die in Fig. 2 gezeigte Freigabestellung zu verschieben, so dass nunmehr in der Betriebsstellung des Maschinenwerkzeugs an der Werkzeugmaschine dieser Stellring frei betätigbar ist.

Das Anschlussteil 8 und der Anschlussversorgungsblock 11 bilden gemeinsam eine Drehmomentstütze mit integrierter Transportarretierung über den Arretierstift 38 und den Stellring 39.

## Patentansprüche

1. Luft- und Stromversorgungsanschluss für ein auswechselbares Maschinenwerkzeug, insbesondere einen Gewindeschneidapparat, dadurch gekennzeichnet, dass ein am Gehäuse des Maschinenwerkzeugs befestigtes Luft- und Stromversorgungs-Anschlussteil (8) bei der Montage des Maschinenwerkzeugs (1) an der Spindelaufnahme (5) der Maschine automatisch an einen daran befestigten Anschlussversorgungsblock (11) elektrisch kontaktierend und unter Freigabe der Druckluftzufuhr andockt.

2. Gewindeschneidapparat nach Anspruch 1, dadurch gekennzeichnet, dass der Anschlussversorgungsblock (11) ein Druckventil (19) mit einem in Andockrichtung und Ventilöffnungsrichtung verlaufenden Betätigungsstift (20) des Ventilstößels (18) aufweist, der nach den Anschließen einer Druckluft-Übernahmehülse (23) des Luft- und Stromversorgungs-Anschlussteils (8) an den Ausgangsstutzen (26) des Ventils (19) ein Schließventil (22) in der Übernahmehülse (23) des Anschlussteils (8) öffnet.

3. Gewindeschneidapparat nach Anspruch 2, dadurch gekennzeichnet, dass die Federkraft der Feder (24) des Ventils (19) kleiner ist als die der Feder (25) des Schließventils (22), und dass die Länge des Betätigungsstiftes (20) so gewählt ist, dass das Ventil (19) bereits vor dem Anschließen der Druckluft-Übernahmehülse (23) an den Ausgangsstutzen (26) zum Freiblasen des Anschlussteils (8) öffnet.

4. Gewindeschneidapparat nach einem der Ansprüche 1 bis 3, dadurch gekennzeichnet, dass der Stößel (18) und der Betätigungsstift (20) des Ventils (19) elektrisch leitend ausgebildet und mit einem Pol (14) einer externen Stromquelle (15) verbunden sind, deren Massepol (16) vorzugsweise mit dem geerdeten Gehäuse des Maschinenwerkzeugs verbunden ist, und dass der in der elektrisch isolierend ausgebildeten Übernahmehülse (23) angeordnete Kolben (21) des Schließventils (22) ebenso wie sein mit der Stromversorgung des Maschinenwerkzeugs verbundener Verschiebebegrenzungsanschlag (36) elektrisch leitend ausgebildet sind.

5. Gewindeschneidapparat nach einem der Ansprüche 1 bis 4, dadurch gekennzeichnet, dass das Anschlussteil (8) als mit seinem Schaft (28) gegen eine Feder (37) längsverschiebbar in einer Hülse (29) am Gehäuse (9) des Maschinenwerkzeugs (1) gelagerter Arretierbolzen (30) mit axialer Druckluftbohrung (27) und radialen Übergabestutzen (31) zur ortsfesten gehäuseseitigen Druckluftleitungsöffnung (33) ausgebildet ist, an dem außen ein Arretierstift (38) für einen Stellring (39) des Gewindeschneidapparats befestigt ist, der beim Andocken in eine Freigabestellung bewegt wird.

6. Gewindeschneidapparat nach Anspruch 5, dadurch gekennzeichnet, dass die radialen Übergabestutzen (31) in einen axialen Ringraum (32) münden der in beiden Endstellungen des Arretierbolzens (30) mit der gehäuseseitigen Druckluftleitungsöffnung (33) in Verbindung steht.

7. Gewindeschneidapparat nach einem der Ansprüche 1 bis 6, dadurch gekennzeichnet, dass das Luft- und Stromversorgungs-Anschlussteil (8) und der Anschlussversorgungsblock (11) gemeinsam eine Drehmomentstütze mit Transportarretierung bilden.
